# EUROPEAN PATENT APPLICATION

(11) **EP 1 643 532 A2**
(43) Date of publication of application: **05.04.2006**
(21) Application number: 05255930.9
(22) Date of filing: 23.09.2005
(51) Int. Cl.: H01J 17/49

(54) **Electron source apparatus**

(30) Priority: 24.09.2004 JP 2004277672
(71) Applicant: Matsushita Toshiba Picture Display Co., Ltd., Takatsuki-shi, Osaka 569-1193 (JP)
(72) Inventor: Yamamoto, Makoto, Takarazuka-shi Hyogo 665-0811 (JP); Shiota, Akinori, Ibaraki-shi Osaka 567-0041 (JP); Koga, Keisuke, Seika-cho Soraku-gun Kyoto 619-0238 (JP)
(74) Representative: Tothill, John Paul

(57) **Abstract**

An electron source apparatus (10) includes a plurality of electron emission portions (4) arranged in a matrix on a Si substrate (1), and a plurality of emitter lines (3) and a plurality of gate lines (8) that are orthogonal to each other, and each of the plurality of electron emission portions (4) being controlled by signals from the plurality of emitter lines (3) and the plurality of gate lines (8) to perform an independent electron emission operation (4). Furthermore, device isolation regions (2) are provided surrounding the respective plurality of emitter lines (3), contact holes (3a) are formed in the respective plurality of emitter lines (3), a plurality of emitter line mounting electrodes (7) that correspond to the respective plurality of emitter lines (3) are provided in a region outside regions that are surrounded by the device isolation regions (2), and conductors (6) that are connected to the respective plurality of emitter line mounting electrodes (7) are connected via the contact holes (3a) to the respective plurality of emitter lines (3) corresponding to the respective plurality of emitter line mounting electrodes (7). Accordingly, the electron source apparatus (10) can achieve high density and size reduction.

## Description

The present invention relates to electron source apparatuses using cold cathodes.

Electron source apparatuses using cold cathodes provide higher electron mobility, are superior in high-speed operation and high-temperature operation and more resistant to radiation damage than electron source apparatuses using semiconductor devices. Therefore, expectations are growing for their applications in various fields. For example, JP H6-176704A discloses an imaging apparatus using a matrix-driven electron source apparatus. When electron source apparatuses are matrix-driven in this way, they also can be used as display apparatuses.

A matrix-driven electron source apparatus used as a display apparatus is configured, for example, by arranging a plurality of segments including tiny cold cathodes in a matrix. More specifically, the cold cathodes are operated by controlling the electron source apparatus by emitter lines and gate lines that are orthogonal to each other. Since each segment needs to be driven independently, the adjacent segments are separated electrically from each other. Various methods for insulating the emitter lines in conventional electron source apparatuses from each other have been proposed, as disclosed, for example, in JP H 11-7884A and JP H6-96663A.

In the electron source apparatus disclosed in JP H11-7884A, a plurality of emitter lines are formed on an insulating substrate such that they are spaced apart from one another. Accordingly, the emitter lines are insulated from one another. However, since the substrate of this electron source apparatus is an insulator, a parasitic capacitance is generated, and the substrate is charged. This influences the potential of the emitter lines, resulting in the problem of deterioration in performance of the electron source apparatus.

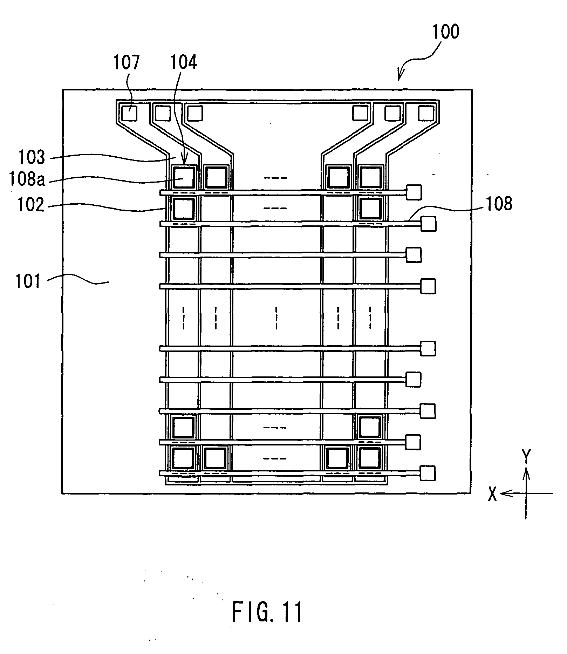

However, such a problem will not arise when the emitter lines are formed on a semiconductor substrate as in the case of the electron source apparatus disclosed in JP H6-96663A. In this electron source apparatus, device isolation regions are disposed between emitter lines, and the emitter lines are insulated from one another. In the following, a conventional layout configuration of device isolation regions that are disposed to insulate between emitter lines in an electron source apparatus using a semiconductor substrate will be described with reference to the drawing. FIG. 11 is a top view showing the layout of device isolation regions in a conventional electron source apparatus. It should be noted that in FIG. 11, the direction in which emitter lines extend is taken as the Y-axis direction, and the direction in which gate lines extend is taken as the X-axis direction.

In addition, as is seen from FIG. 11, in a conventional electron source apparatus 100, a plurality of emitter lines 103 that are each surrounded by a device isolation region 102 are formed on an electron source array substrate 101, which is a Si substrate. As shown in FIG. 11, a plurality of emitter lines 103 that are formed parallel to the Y-axis are provided in the X-axis direction, and the adjacent emitter lines 103 are insulated from one another by the device isolation regions 102. The emitter lines 103 are made of a low-resistance material.

Segments 104 that are formed in the emitter lines 103 and provided with a plurality of tiny cold cathodes (not shown) are arranged in a matrix. Gate electrodes 108a having a pore formed in the vicinity of the tip of each of the cold cathodes are provided above the cold cathodes (the front side of the sheet in FIG. 11). The gate electrodes 108a are connected to gate lines 108 that are parallel to the X-axis.

A mounting electrode 107 is provided in each of the emitter lines 103. That is, the mounting electrode 107 is disposed in a region that is surrounded by the device isolation region 102 and in which the emitter line 103 is formed. The mounting electrode 107 is connected to an external electrode by connecting, for example, a bonding wire to the mounting electrode 107.

In the configuration of the conventional electron source apparatus 100, the mounting electrode 107 is disposed above the emitter line 103, so that the mounting electrode 107 can be disposed only on the side of the electron source array substrate 101 that is parallel to the X-axis. Therefore, the mounting electrode 107 cannot be disposed on the side that is parallel to the Y-axis. Thus, there are limitations to the layout positions of the mounting electrode 107, and therefore, the design flexibility is low. Furthermore, even if the segments 104 are formed into a tiny size, there are limitations to the size reduction of the electron source apparatus 100 due to the limitations to the layout positions of the mounting electrodes 107.

For example, there are limitations to the reduction in pitch between the mounting electrodes 107. Even if the width of the emitter lines 103 (the length along the X-axis) is narrowed, the layout positions of the mounting electrodes 107 remain the same, so that the length of the electron source array substrate 101 in the X-axis direction cannot be decreased, as shown in FIG. 11. Accordingly, there are limitations to the size reduction of the electron source apparatus 100.

Therefore, the present invention was made in view of the foregoing problems, and it is an object of the present invention to provide an electron source apparatus that can achieve high density and size reduction.

An electron source apparatus according to the present invention includes: a plurality of electron emission portions arranged in a matrix on a Si substrate; and a plurality of emitter lines and a plurality of gate lines that are orthogonal to each other, each of the plurality of electron emission portions being controlled by signals from the plurality of emitter lines and the plurality of gate lines to perform an independent electron emission operation. Device isolation regions are provided surrounding the respective plurality of emitter lines, and contact holes are formed in the respective plurality of emitter lines. A plurality of emitter line mounting electrodes that correspond to the respective plurality of emitter lines are provided in a region outside regions that are surrounded by the device isolation regions, and conductors that are connected to the respective plurality of emitter line mounting electrodes are connected via the contact holes to the emitter lines corresponding to the respective plurality of emitter line mounting electrodes.

In an electron source apparatus of the present invention, contact holes are provided in emitter lines, emitter line mounting electrodes are provided in a region outside the region in which the emitter lines are surrounded by device isolation regions, and conductors that are connected to the emitter line mounting electrodes are connected to the emitter lines via the contact holes. Since the emitter line mounting electrodes are provided in a region other than the region in which the emitter lines are formed, the shape (e.g., the width and the length) of the emitter lines is not affected by the layout of the emitter line mounting electrodes. Accordingly, it is possible to reduce the size of the electron emission portions (segments) without taking the layout positions of the emitter line mounting electrodes into consideration, thus providing an electron source apparatus that has realized high density and size reduction.

Furthermore, since the emitter line mounting electrodes can be disposed in any position on the substrate without any limitation to their layout positions, the design flexibility increases, making it possible to locate the emitter line mounting electrodes with high density. Accordingly, it is possible to decrease the area of the region in which the emitter line mounting electrodes are disposed, thereby realizing an electron source apparatus with a reduced size.

Further, since low-resistance conductors can be used as the conductors for connecting the emitter lines and the emitter line mounting electrodes, it is possible to increase the driving speed of the electron source apparatus, and to reduce the power consumption.

The electron source apparatus has high design flexibility, and can achieve size reduction and high density, so that its redundancy also can be improved.

In the electron source apparatus of the present invention, it is preferable that the plurality of emitter line mounting electrodes and the plurality of emitter lines are disposed in different layers. With this configuration, it is possible, for example, to dispose the conductors connected to the emitter line mounting electrodes on the emitter lines such that the conductors intersect the emitter lines, thereby routing the conductors efficiently. Furthermore, when a driving circuit, for example, is formed on the same substrate concurrently, it is possible to increase the flexibility in the wiring connection between these components.

In the electron source apparatus of the present invention, it is preferable that the conductors that connect the contact holes and the emitter line mounting electrodes are a pure metal or alloy composed mainly of at least one selected from the group consisting of aluminum, copper and silver. This allows the emitter lines and the emitter line mounting electrodes to be connected at a low resistance. Accordingly, it is possible to increase the driving speed of the electron source apparatus, and to reduce the power consumption.

In the electron source apparatus of the present invention, it is preferable that the plurality of emitter lines are an n-type semiconductor, and the Si substrate on which the plurality of emitter lines are formed is formed by a p-type semiconductor. This makes it possible to form electrodes capable of controlling the substrate potential, by simply forming electrodes on the surface of the substrate. That is, electrodes that control the substrate potential readily can be produced, without treating the surface of the substrate. By controlling the substrate potential, it is possible to realize an electron source apparatus capable of setting an optimum withstand voltage design and optimum driving conditions and providing a high-speed response.

In the electron source apparatus of the present invention, it is preferable that the plurality of emitter line mounting electrodes and a plurality of mounting electrodes other than the plurality of emitter line mounting electrodes are disposed along a single side of the Si substrate. This makes it possible to decrease the area of the region in which the emitter line mounting electrodes are provided, thus reducing the size of the electron source apparatus. Moreover, the connection between the electron source apparatus and external devices can be made easily.

In the electron source apparatus of the present invention, it is preferable that at least a portion of a driving circuit is provided on the Si substrate on which the plurality of electron emission portions are disposed. This improves the production yield of the electron source apparatus.

In the electron source apparatus of the present invention, it is preferable that the driving circuit is produced concurrently with the electron emission portions. This enables the electron source apparatus to be produced efficiently, thus also improving the yield.

Preferred embodiments of the present invention will now be described, by way of example only, and with reference to the accompanying drawings, in which:
FIG. 1A is a top view showing the layout of device isolation regions in an electron source apparatus according to Embodiment 1 of the present invention.
FIG. 1B is a cross-sectional view taken along the line IB-IB in FIG. 1A.
FIG. 2 is a top view showing the configuration of a segment of the electron source apparatus according to Embodiment 1 of the present invention.
FIG. 3 is a cross-sectional view taken along the line III-III in FIG. 2.
FIG. 4 is cross-sectional view taken along the line IV-IV in FIG. 2.
FIG. 5A is a cross-sectional view showing a step of producing the electron source apparatus according to Embodiment 1 of the present invention.
FIG. 5B is a cross-sectional view showing a step of producing the electron source apparatus according to Embodiment 1 of the present invention.
FIG. 5C is a cross-sectional view showing a step of producing the electron source apparatus according to Embodiment 1 of the present invention.
FIG. 5D is a cross-sectional view showing a step of producing the electron source apparatus according to Embodiment 1 of the present invention.
FIG. 5E is a cross-sectional view showing a step of producing the electron source apparatus according to Embodiment 1 of the present invention.
FIG. 6 is a top view showing a configuration in which another electron source apparatus according to Embodiment 1 of the present invention is mounted on a glass substrate.
FIG. 7 is a top view showing a configuration in which an electron source apparatus according to Embodiment 2 of the present invention is mounted on a glass substrate.
FIG. 8 is a cross-sectional view taken along the line VIII-VIII in FIG. 7.
FIG. 9 is a top view showing a configuration in which an electron source apparatus according to Embodiment 3 of the present invention is mounted on a glass substrate.
FIG. 10A is a cross-sectional view showing a step of producing a driving circuit that is being produced concurrently with the electron source apparatus according to Embodiment 3 of the present invention.
FIG. 10B is a cross-sectional view showing a step of producing a driving circuit that is being produced concurrently with the electron source apparatus according to Embodiment 3 of the present invention.
FIG. 10C is a cross-sectional view showing a step of producing a driving circuit that is being produced concurrently with the electron source apparatus according to Embodiment 3 of the present invention.
FIG. 10D is a cross-sectional view showing a step of producing a driving circuit that is being produced concurrently with the electron source apparatus according to Embodiment 3 of the present invention.
FIG. 10E is a cross-sectional view showing a step of producing a driving circuit that is being produced concurrently with the electron source apparatus according to Embodiment 3 of the present invention.
FIG. 10F is a cross-sectional view showing a step of producing a driving circuit that is being produced concurrently with the electron source apparatus according to Embodiment 3 of the present invention.
FIG. 11 is a top view showing the layout of device isolation regions in a conventional electron source apparatus.

Hereinafter, the best mode for embodying the invention will be described with reference to the drawings.

### Embodiment 1

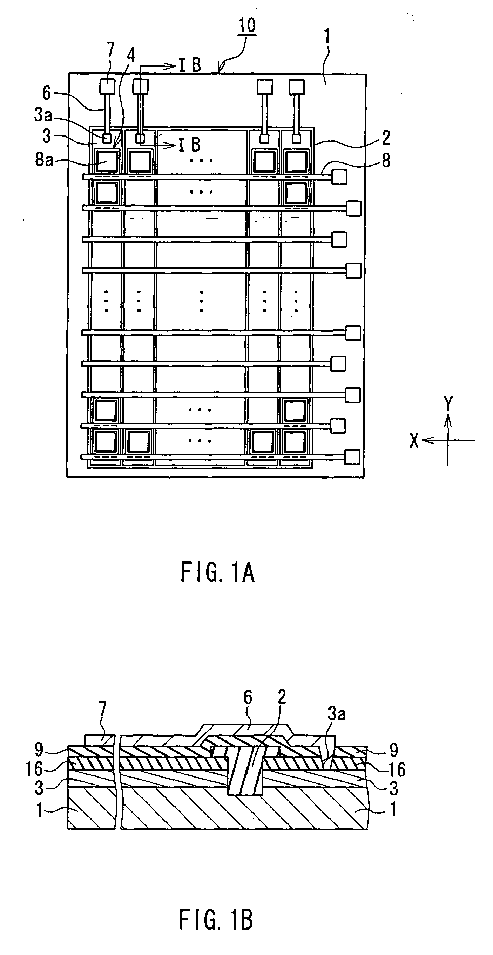

An electron source apparatus according to Embodiment 1 of the present invention will be described with reference to the drawings. FIG. 1A is a top view showing the layout of device isolation regions in the electron source apparatus according to Embodiment 1 of the present invention. Further, FIG. 1B is a cross-sectional view taken along the line IB-IB in FIG. 1A. It should be noted that in FIG. 1A, the direction in which emitter lines extend is taken as the Y-axis direction, and the direction in which gate lines extend is taken as the X-axis direction. It should be noted that, as shown in FIG. 1B, although an interlayer insulating film 9 and a CVD-SiO₂ film 16 are provided above a emitter line 3, they are not shown in FIG. 1A for illustrative reasons.

As shown in FIG. 1A, an electron source apparatus 10 according to Embodiment 1 includes segments (electron emission portions) 4 that are arranged in a matrix, and emitter lines 3 and gate lines 8 that are orthogonal to one another. The segments 4 are controlled by signals from the emitter lines 3 and the gate lines 8, and each performs an independent electron emission operation. Since each of the segments 4 needs to be driven independently, the adjacent segments 4 are separated electrically from each other.

As shown in FIG. 1A, the electron source apparatus 10 of Embodiment 1 has a configuration in which the emitter lines 3 that are separated electrically from one another by the device isolation regions 2 are formed on an electron source array substrate 1, which is a Si substrate. As shown in FIG. 1A, a plurality of emitter lines 3 formed parallel to the Y-axis are provided along the X-axis direction, and adjacent emitter lines 3 are insulated from one other by the device isolation regions 2. Each of the emitter lines 3 is constituted by an (N⁺)-Si layer whose resistance is lowered by doping the surface of the electron source array substrate 1, which is a Si substrate, to a predetermined depth with P (phosphorus), As (arsenic) or the like.

A plurality of tiny cold cathodes (not shown) are disposed on each of the emitter lines 3. The segments 4 that include these cold cathodes are arranged in a matrix. Gate electrodes 8a having a pore formed in the vicinity of the tip of each of the cathodes are provided above the cathodes (the front side of the sheet in FIG. 1A). The gate electrodes 8a are connected to gate lines 8 that are parallel to the X-axis.

A contact hole 3a is formed above each of the emitter lines 3. As shown in FIG 1B, the contact hole 3a is formed by making a hole in the interlayer insulating film 9 and the CVD-SiO₂ film 16. A conductor 6 connected to an emitter line mounting electrode 7 that is formed outside each of the emitter lines 3 is connected to the emitter line 3 via the contact hole 3a. It should be noted that the conductor 6 is provided over the device isolation regions 2. The conductor 6 may be a low-resistance conductor, preferably a conductor formed from a pure metal or alloy composed mainly of at least one selected from Al (aluminum), Cu (copper) and Ag (silver) as the main component. For example, the conductor 6 may be an Al-Si-Cu alloy film or Al-Nd (neodymium) alloy film. In this case, for example, the conductor 6 may contain at least 90 atm% of Al. Alternatively, the conductor 6 may be an Ag-Pd (palladium)-Cu alloy film. In this case, for example, the conductor 6 may contain at least 90 atm% of Ag. Additionally, the resistivity of the conductor 6 is preferably at most 10 µΩ·cm, more preferably at most 5 µΩ·cm. This enables high-speed driving and reduced power consumption of the electron source apparatus 10.

The mounting electrodes 7 are provided outside the region in which the emitter lines 3 surrounded by the device isolation regions 2 are formed. Therefore, the shape (e.g., the width and the length) of the emitter lines 3 will not be affected by the layout of the mounting electrodes 7. Thus, it is possible to reduce the size of the segments 4, without taking the mounting electrodes 7 into consideration. Accordingly, it is possible to increase the density and decrease the size of the electron source apparatus 10.

Furthermore, the mounting electrodes 7 can be disposed at any positions on the electron source array substrate 1, without any limitation to their layout positions, so that the design flexibility increases and the mounting electrodes 7 can be located with high density. Accordingly, it is possible to decrease the area of the regions in which the mounting electrodes 7 are disposed, and to reduce the size of the electron source apparatus 10.

As described above, the electron source apparatus 10 has high design flexibility, and can achieve size reduction and high density. Therefore, its redundancy also can be improved. More specifically, the pitch between the emitter lines 3 and that between the gate lines 8 each can be decreased to 40 µm or less, more preferably 20 µm or less.

Furthermore, since the electron source apparatus 10 of Embodiment 1 has the above-described configuration, the mounting electrodes 7 and the emitter lines 3 can be formed in different layers. With this configuration, for example, the conductors, such as the conductors 6, that are connected to the mounting electrodes 7, can be disposed on the emitter lines 3 such that the conductors intersect the emitter lines 3. Thus, the conductors can be routed efficiently.

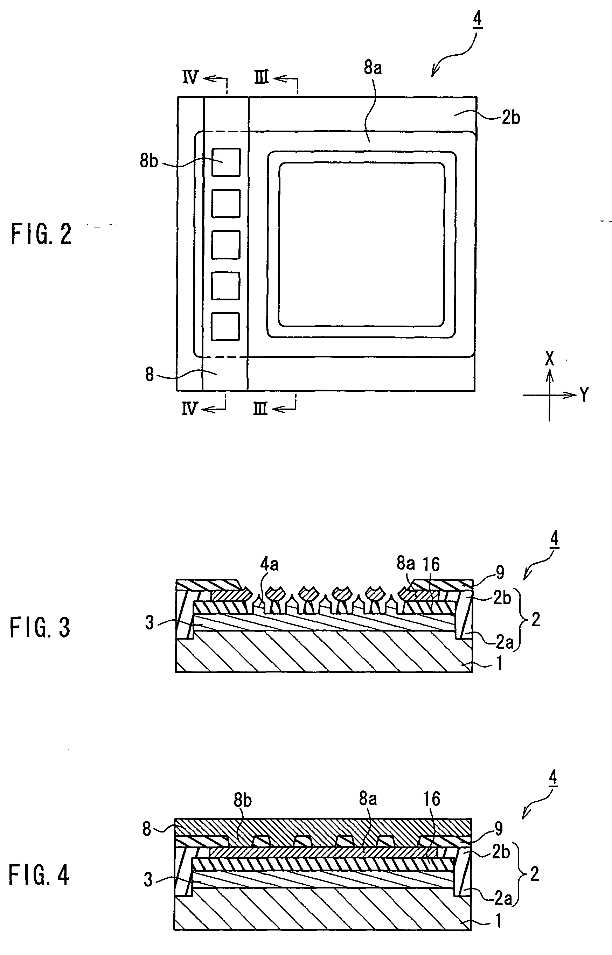

The configuration of each of the segments 4 will be described with further reference to FIG. 2 to FIG. 4. FIG. 2 is a top view showing the configuration of a segment of the electron source apparatus according to Embodiment 1 of the present invention, FIG. 3 is a cross-sectional view taken along the line III-III in FIG. 2, and FIG. 4 is cross-sectional view taken along the line IV-IV in FIG. 2. In FIG. 2, the direction in which the emitter lines extend is taken as the Y-axis direction, and the direction in which the gate lines extend is taken as the X-axis direction. It should be noted that, as shown in FIG. 3 and FIG. 4, although an interlayer insulating film 9 is provided above the gate electrode 8a, the interlayer insulating film 9 is not shown in FIG. 2 for illustrative reasons. Further, emitters 4a also have been omitted in FIG. 2, for illustrative reasons.

As shown particularly in FIG. 3, emitter lines 3 that are provided with a plurality of emitters 4a having a sharpened tip are provided on the electron source array substrate 1. A gate electrode 8a is provided above each emitter line 3. In the gate electrode 8a, a pore is formed around the tip of each of the emitters 4a.

As shown particularly in FIG. 4, the gate line 8 is connected to the gate electrode 8a, which is a different layer, via contact holes 8b.

Furthermore, a device isolation region 2 is provided such that the adjacent emitter lines 3 are insulated from one another. The device isolation region 2 is made up of a trench 2a and an embedded planarizing film 2b.

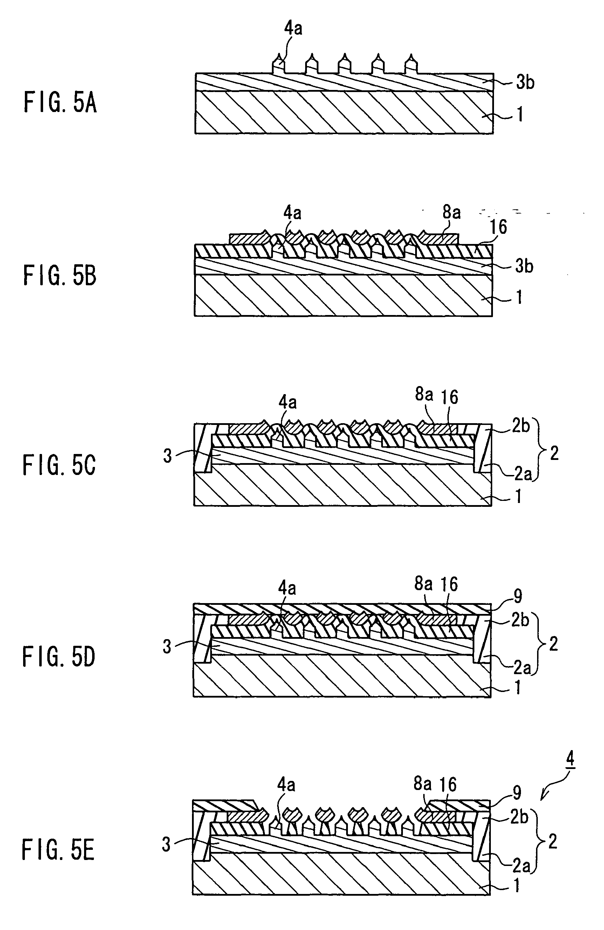

Next, a method for producing the electron source apparatus 10 according to Embodiment 1 will be described. FIG. 5A to FIG. 5E are cross-sectional views showing steps of producing the electron source apparatus according to Embodiment 1 of the present invention. In addition, FIG. 5A to FIG. 5E show cross-sectional views taken along the line III-III in FIG. 2.

First, an (N⁺)-Si layer having a thickness of about 2.5 to 3.5 µm, for example, is formed on the surface of an electron source array substrate 1, which is a (P⁺)-Si substrate, by a diffusion process. Emitters 4a made of Si that have a height of 0.3 to 0.5 µm, for example, and a sharpened tip are formed above the (N⁺)-Si layer is formed by etching and the like. Thereby an (N⁺)-Si layer 3b and the emitters 4a, which is (N⁺)-Si, are formed on the electron source array substrate 1 (FIG. 5A). It should be noted that the (N⁺)-Si layer 3b is the portion that will become an emitter line 3 in a later step.

Then, a CVD-SiO₂ film 16 is formed on the entire surface of the (N⁺)-Si layer 3b and the emitters 4a. Further, a conductive poly-Si film is formed on the CVD-SiO₂ film 16 by performing a CVD (chemical vapor deposition) film formation process in a gas containing an (N⁺) type dopant. It should be noted that, instead of forming a conductive poly-Si film directly, a nonconductive poly-Si film may be formed, and the nonconductive poly-Si film then may be provided with conductivity by ion implantation or diffusion so as to form a conductive poly-Si film. After planarizing the surface of this poly-Si film by forming an organic or inorganic coated insulation film (SOG film: spin on glass) on the poly-Si film, uniform etching is performed from the surface of the SOG film. By this etching, the portions of the poly-Si film that correspond to the tips of the emitters 4a are exposed. At or immediately before this exposure of the poly-Si film, the etching conditions are changed to the etching conditions for the poly-Si film. Accordingly, the portions of the poly-Si film that correspond to the locations around the tips of the emitters 4a are opened conforming to the shape of the emitters 4a. Additionally, a gate electrode 8a is formed by dry-etching the poly-Si film into a predetermined shape (FIG. 5B).

Next, emitter lines 3 are formed by forming trenches 2a in the (N⁺)-Si layer 3b. Specifically, the trenches 2a are formed in the (N⁺)-Si layer 3b by performing dry-etching such that the adjacent emitter lines 3 are insulated from each other. The width of the trenches 2a is, for example, 0.5 to 1.5 µm, and the depth thereof is made larger than that of the emitter lines 3. Insulation films are embedded into the thus formed trenches 2a, thereby forming embedded planarizing films 2b, which constitutes a flat surface, above the trenches 2a (FIG. 5C). Thus, the emitter lines 3 that are parallel to one another are formed, as shown in FIG. 1A.

Then, an interlayer dielectric 9, which is a SiO₂ film, is formed by a plasma CVD process or an atmospheric CVD process so as to cover the gate electrode 8a and the embedded planarizing films 2b. The interlayer dielectric 9 is formed to protect the gate electrode 8a (FIG. 5D).

Thereafter, although not shown in the drawings, the contact holes 3a shown in FIG. 1A and FIG. 1B and the contact holes 8b shown in FIG. 2 are formed. The contact holes 3a have a depth reaching the emitter lines 3 and the contact holes 8b have a depth reaching the gate electrode 8a.

Next, an AlSiCu/Ti film is formed and etching is performed on the film, and thereby the gate lines 8, the mounting electrodes 7, the conductors 6 (see FIG. 1A) and other necessary conductors and electrodes are formed.

Finally, for each of the segments 4, the interlayer dielectric 9 and the CVD-SiO₂ film 16 are removed by etching at their portions corresponding to the positions of the emitters 4a (FIG. 5E). Through the above-described production steps, the electron source apparatus 10 according to Embodiment 1 is completed.

The method for producing the electron source apparatus 10 according to Embodiment 1 is not limited to the above-described production method. Any commonly used method for producing an electron source apparatus may be used, as long as the method can produce the electron source apparatus 10 according to Embodiment 1 (see FIG. 1A), in which the mounting electrodes 7 are formed outside the emitter lines 3, and the mounting electrodes 7 are connected to the emitter lines 3 by the conductors 6 via the contact holes 3a formed on the emitter lines 3, as described above. Although different from the production method described with reference to FIG. 5A to FIG. 5E, for example, the electron source array substrate 1 first may be divided into the regions serving as the emitter lines 3 by forming the trenches 2a and the embedded planarizing film 2b, constituting the device isolation regions 2, on the electron source array substrate 1, and the emitters 4a may be formed thereafter.

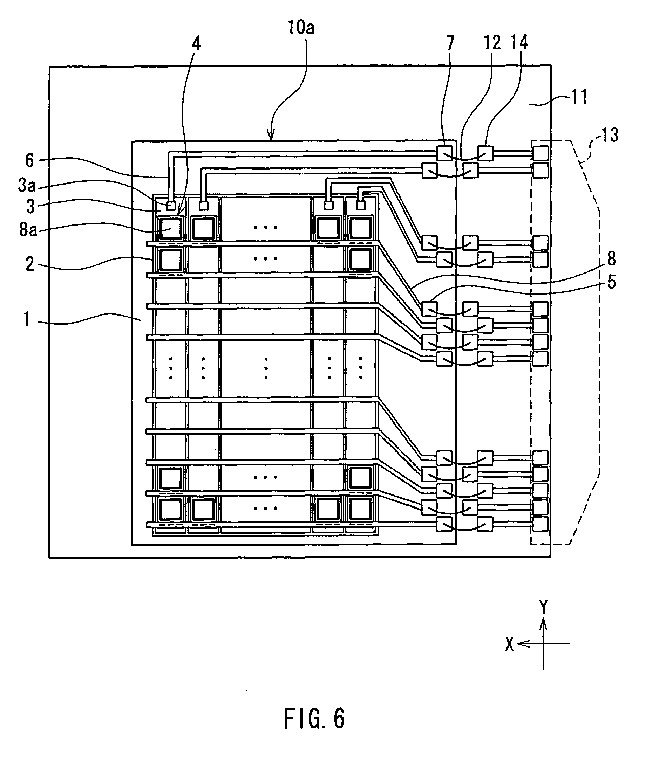

Here, FIG. 6 is a top view showing a configuration in which another electron source apparatus according to Embodiment 1 of the present invention is mounted on a glass substrate. As shown in FIG. 6, another electron source apparatus 10a according to Embodiment 1 of the present invention has substantially the same configuration as the electron source apparatus 10 shown in FIG. 1A, but is different in that the mounting electrodes 7 and mounting electrodes 5, which are the mounting electrodes for lines other than emitter lines, are disposed along a single side of the electron source array substrate 1. In addition, the mounting electrodes 5 are connected to the gate lines 8.

The electron source apparatus 10a is provided on a glass substrate 11, and electrodes 14 that are provided on the glass substrate 11 are connected to the mounting electrodes 5 and 7 via bonding wires 12. Furthermore, the electrodes 14 on the glass substrate 11 are connected to a FPC (flexible printed circuit) 13, such that signals that are input from the outside can be sent to the electron source apparatus 10a.

In the electron source apparatus 10a, since all the mounting electrodes 5 and 7 are disposed along a single side of the electron source array substrate 1, it is possible to decrease the area for disposing the mounting electrodes 5 and 7, thus reducing the size of the electron source apparatus 10a. Moreover, since only a single FPC 13 is required, the cost can be lowered.

### Embodiment 2

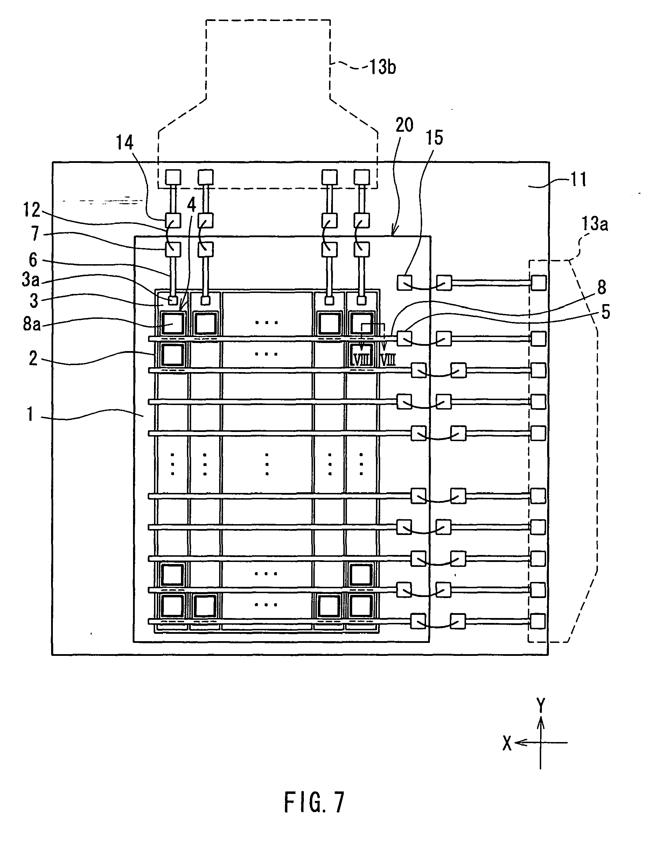

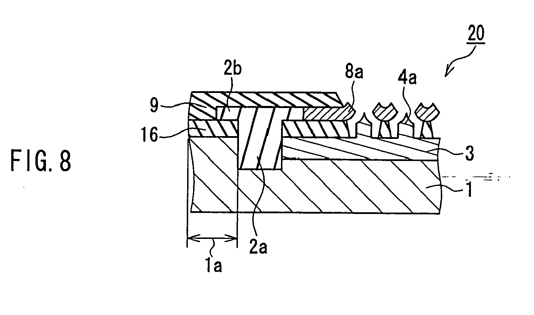

An electron source apparatus according to Embodiment 2 of the present invention will be described with reference to FIG. 7 and FIG. 8. FIG. 7 is a top view showing a configuration in which the electron source apparatus according to Embodiment 2 of the present invention is mounted on a glass substrate. FIG. 8 is a cross-sectional view taken along the line VIII-VIII in FIG. 7.

The basic configuration of an electron source apparatus 20 according to Embodiment 2 is substantially the same as that of the electron source apparatus 10 of Embodiment 1 shown in FIG. 1A. Therefore, the components having the same functionality are given the same reference numbers, and their further description has been omitted.

The emitter lines 3 of the electron source apparatus 20 of Embodiment 2 are made of an (N⁺)-Si layer. The electron source array substrate 1 on which the emitter lines 3 are formed is (P⁺)-Si. The electron source apparatus 20 will be described specifically with reference to FIG. 7 and FIG. 8, which is a cross-sectional view of the electron source apparatus 20. The emitter lines 3 are (N⁺)-Si, and the electron source array substrate 1 on which the emitter lines 3 are formed is formed of (P⁺)-Si. With this configuration, it is possible to form electrodes serving as substrate electrodes 15 for controlling the substrate potential of the electron source apparatus 20, by simply forming electrodes on the surface of the electron source array substrate 1. Specifically, since the electron source array substrate 1 is (P⁺)-Si, electrodes that can serve as the substrate electrodes 15 can be formed by simply forming electrodes on the surface of a region 1a, which is a region other than the region in which the emitter lines 3 are formed, in the electron source array substrate 1. The substrate potential of the electron source apparatus 20 can be controlled by controlling the potential of the substrate electrodes 15.

For example, when the surface of the electron source array substrate 1 in the region 1a is a (N⁺)-Si layer, electrodes that simply are formed on the surface of the electron source array substrate 1 cannot serve as the substrate electrodes. These electrodes can serve as the substrate electrodes by further performing a mounting process such as connecting these electrodes to the back surface, on which a native oxide layer tends to be formed, of the electron source array substrate 1. However, as described above, the electron source apparatus 20 of Embodiment 2 has the effect that the substrate electrodes 15 readily can be produced without increasing the number of the production steps, thus also improving the mounting reliability.

As shown in FIG. 7, the electron source apparatus 20 is provided on the glass substrate 11. The substrate electrodes 15 are formed on the surface of the electron source array substrate 1. The electrodes 14 that are provided on the glass substrate 11 are connected to the mounting electrodes 5, 7 and the substrate electrodes 15 via the bonding wires 12. Further, the electrodes 14 on the glass substrate 11 are connected to FPCs 13a and 13b, such that signals that are input from the outside can be sent to the electron source apparatus 20. It should be noted that, since the mounting electrodes 5 and 7 are disposed on two sides of the electron source array substrate 1, the electron source apparatus 20 requires two FPCs, namely the FPCs 13a and 13b.

By controlling the substrate potential, it is possible to set an optimum withstand voltage design and optimum driving conditions. When the substrate potential cannot be controlled, the withstand voltage of the pn junction may decrease, or the voltage applied to a portion of the emitter lines 3 at the time of matrix-driving may change the potential of the rest of the emitter lines 3, thus rendering the operation unstable.

The method for producing the electron source apparatus 20 according to Embodiment 2 is basically the same as the method for producing the electron source apparatus of Embodiment 1 shown in FIG. 5A to FIG. 5E. The difference is that the (N⁺)-Si layer is not formed on the portions of the surface of the electron source array substrate 1 that are different from the region in which the emitter lines 3 are formed. When forming the (N⁺)-Si layer, the (N⁺)-Si layer may be formed, for example, by performing ion implantation or diffusion; with a mask being formed by photolithography on the portions other than the region in which the emitter lines 3 are formed. Consequently, the (N⁺)-Si layer is formed only on the region in which the emitter lines 3 are formed.

Further, the substrate electrodes 15 may be produced concurrently with the above-described electron source apparatus 20. For example, at the time of forming the contact holes 3a and the contact holes 8b during production of the electron source apparatus 20, contact holes having a depth reaching the electron source array substrate 1 may be formed for the substrate electrodes 15. Further, at the time of forming, for example, the gate lines 8, the mounting electrodes 7 and the conductors 6 by forming the AlSiCu/Ti film and performing etching, the substrate electrodes 15 may be produced in the same manner as these components.

### Embodiment 3

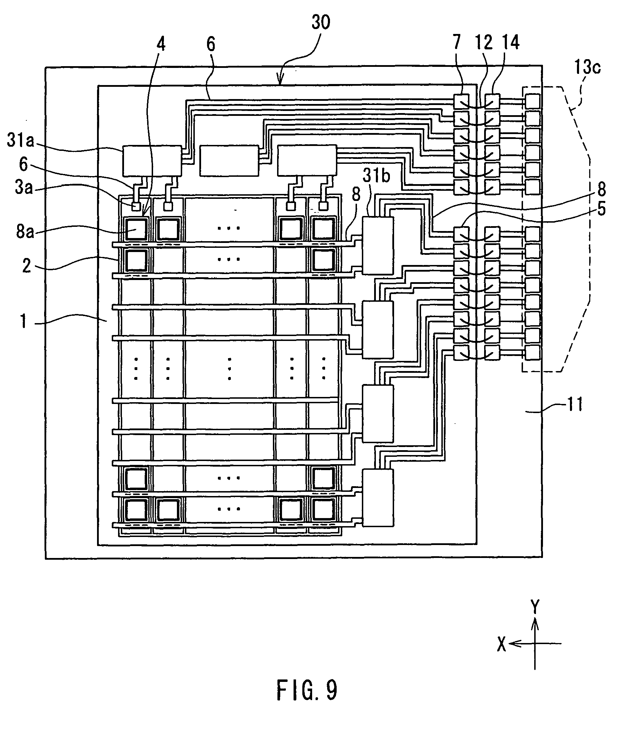

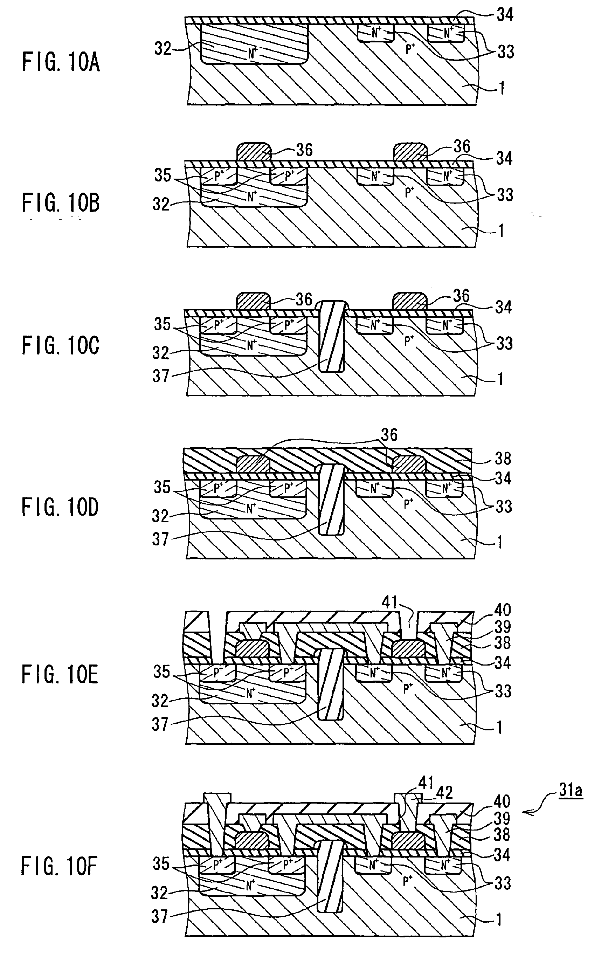

An electron source apparatus according to Embodiment 3 of the present invention will be described with reference to the drawings. FIG. 9 is a top view showing a configuration in which the electron source apparatus according to Embodiment 3 of the present invention is mounted on a glass substrate. FIG. 10A to FIG. 10F are cross-sectional views showing steps of producing a driving circuit that is being produced concurrently with the electron source apparatus according to Embodiment 3 of the present invention.

The basic configuration of an electron source apparatus 30 of Embodiment 3 is substantially the same as that of the electron source apparatus 10 of Embodiment 1, and therefore, the components having the same functionality are given the same reference numerals, and their further description has been omitted. The electron source apparatus 30 of Embodiment 3 is different from the electron source apparatus 10 of Embodiment 1 in that it has driving circuits 31a and 31b.

The electron source apparatus 30 is provided with the driving circuits 31a and 31b that include P-MOS and N-MOS transistors on the electron source array substrate 1. The contact holes 3a are connected to the mounting electrodes 7 via the driving circuits 31a. Furthermore, the gate lines 8 are connected to the mounting electrodes 5 via the driving circuits 31b. For example, in the case of using the electron source apparatus 30 of Embodiment 3 for imaging elements or display apparatuses, the electron source apparatus 30 may be configured such that the driving circuits 31a control scanning signals, and the driving circuits 31b control video signals.

Since the electron source apparatus 30 of Embodiment 3 has this configuration, it is possible to decrease the number of all the mounting electrodes, including the mounting electrodes 5 and 7, that are to be provided on the electron source array substrate 1. That is, when the driving circuits 31a and 31b are not provided, the same number of the mounting electrodes as the segments 4 are required. However, when the driving circuits 31a and 31b are provided, as in the case of the electron source apparatus 30 of Embodiment 3, the number of the mounting electrodes can be decreased significantly, since, for example, only video signals and trigger signals need to be supplied from the outside. In the case of using the electron source apparatus, for example, for a VGA (video graphics array) standard display apparatus that includes 640 x 480 pixels, an electron source apparatus including no driving circuit would require 1120 mounting electrodes. However, in the case of using the electron source apparatus 30 of Embodiment 3, only about a dozen to about a few dozens of mounting electrodes are required.

It should be noted that although the electron source apparatus 30 of Embodiment 3 is provided with two types of driving circuits, namely the driving circuits 31a and 31b, the type of the driving circuit is not limited to these, and a plurality of types of driving circuits, other than one or two types, may be provided.

Furthermore, the electrodes 14 on the glass substrate 11 are connected to the FPC 13c, such that signals that are input from the outside can be sent to the electron source apparatus 30. Accordingly, it is possible to reduce the size of the electron source apparatus 30. It is also possible to decrease the number of the mounting electrodes, and therefore the production yield of the electron source apparatus 30 increases.

Further, many of the production steps of the driving circuits 31a and 31b of the electron source apparatus 30 are similar to the production steps described in Embodiment 1, the driving circuits 31a and 31b can be produced concurrently with the electron source apparatus 30. Accordingly, it is possible to produce the electron source apparatus 30 efficiently, thus also increasing the yield.

Furthermore, for example, by forming the mounting electrodes 7 and the emitter lines 3 in different layers, it is possible to achieve the effect that the flexibility in the wiring connection between these components further increases.

A method for producing the driving circuits 31a of the electron source apparatus 30 will be described with reference to FIG. 10A to FIG. 10F. It should be noted that the method for producing the driving circuits 31b is similar to the method for producing the driving circuits 31a, and therefore, their further description has been omitted. Reference also will be made to FIG. 5A to FIG. 5E, which show the steps of producing the electron source apparatus 10 of Embodiment 1. In addition, the method for producing the components of the electron source apparatus 30 other than the driving circuits 31a is substantially the same as the method for producing the electron source apparatus 10 of Embodiment 1, so its further description has been omitted.

In FIG. 10A to FIG. 10F, an N-MOS transistor is produced on the right side of the electron source array substrate 1, and a P-MOS transistor is produced on the left side. First, in order to form the emitters 4a in the step shown in FIG. 5A, an (N⁺)-Si layer is formed on the surface of the electron source array substrate 1. At this time, in the driving circuit 31a, a well region 32 of the P-MOS transistor is formed by (N⁺)-Si by performing diffusion or implanting a donor impurity such as P (phosphorus) and As (arsenic). Thereafter, source-drain regions 33 having a depth of 0.5 to 1.0 µm, for example, of the N-MOS transistor are formed by (N⁺)-Si using a mask process similar to that used for the well region 32. Additionally, a thermal oxide film is formed on the electron source array substrate 1 at the time of forming the emitters 4a, and this thermal oxide film is left on the portions necessary for forming a gate oxide film 34 of the P-MOS and the N-MOS transistors (FIG. 10A).

Then, an acceptor impurity such as B (boron) is implanted into source-drain regions 35 of the P-MOS transistor so as to form (P⁺) regions having a depth of 0.5 to 1.0 µm, for example. Furthermore, at the time of forming the gate electrode 8a in the step shown in FIG. 5B, gate electrodes 36 of the P-MOS and the N-MOS transistors are formed by a similar step (FIG. 10B).

Next, at the time of forming the trenches 2a and the embedded planarizing films 2b in the step shown in FIG. 5C, a device isolation region 37 that includes a trench and an embedded planarizing film for separating between the P-MOS and the N-MOS transistors is formed by a similar step (FIG. 10C).

Then, at the time of forming the interlayer dielectric 9 in the step shown in FIG. 5D, an interlayer dielectric 38 is formed on the P-MOS and the N-MOS transistors by a similar step (FIG. 10D).

Then, contact holes are formed in the necessary portions of the electrodes of the P-MOS and the N-MOS transistors, and at the time of forming the gate lines 8 after the step shown in FIG. 5D, conductors 39 are formed by a similar step. Furthermore, in order to achieve a multi-layer structure, an interlayer dielectric 40 is formed on the conductors 39 after the formation of the conductors 39, thus forming contact holes 41 (FIG. 10E).

Finally, conductors 42 are formed in the contact holes 41, and thereby the driving circuit 31a is completed (FIG. 10F).

As described above, the electron source apparatus 30 of Embodiment 3 readily can be produced using a commonly used method for producing an electron source apparatus.

Although Embodiments 1 to 3 has been described above, the present invention is not limited to the above-described specific embodiments. For example, the emitters may be the Spindt type, or may be formed by carbon nanotubes. Furthermore, the method for producing the electron source apparatus is not limited to the above-described specific embodiments, and any other commonly used production method may be used.

As described above, the present invention can provide an electron source apparatus that can achieve high density and size reduction.

Further, although there is no particular limitation with respect to the field of application of the electron source apparatus of the present invention, the electron source apparatus of the present invention is useful, for example, for display apparatuses such as television receivers and display monitors, and electron source arrays for imaging elements, since they can achieve high density and size reduction.

## Claims

1. An electron source apparatus comprising:
a plurality of electron emission portions arranged in a matrix on a Si substrate; and
a plurality of emitter lines and a plurality of gate lines that are orthogonal to each other,
each of the plurality of electron emission portions being controlled by signals from the plurality of emitter lines and the plurality of gate lines to perform an independent electron emission operation;
wherein device isolation regions are provided surrounding the respective plurality of emitter lines,
wherein contact holes are formed in the respective plurality of emitter lines,
wherein a plurality of emitter line mounting electrodes that correspond to the respective plurality of emitter lines are provided in a region outside regions that are surrounded by the device isolation regions, and
wherein conductors that are connected to the respective plurality of emitter line mounting electrodes are connected via the contact holes to the emitter lines corresponding to the respective plurality of emitter line mounting electrodes.

2. The electron source apparatus according to claim 1,
wherein the plurality of emitter line mounting electrodes and the plurality of emitter lines are disposed in different layers.

3. The electron source apparatus according to claim 1,
wherein the conductors that connect the contact holes and the emitter line mounting electrodes are a pure metal or alloy composed mainly of at least one selected from the group consisting of aluminum, copper and silver.

4. The electron source apparatus according to claim 1,
wherein the plurality of emitter lines are an n-type semiconductor, and the Si substrate on which the plurality of emitter lines are formed is formed by a p-type semiconductor.

5. The electron source apparatus according to claim 1,
wherein the plurality of emitter line mounting electrodes and a plurality of mounting electrodes other than the plurality of emitter line mounting electrodes are disposed along a single side of the Si substrate.

6. The electron source apparatus according to claim 1,
wherein at least a portion of a driving circuit is provided on the Si substrate on which the plurality of electron emission portions are disposed.

7. The electron source apparatus according to claim 6,
wherein the driving circuit is produced concurrently with the electron emission portions.
